(19) Europäisches Patentamt
European Patent Office
Office européen des brevets

(11) EP 1 967 388 B1

(12) **EUROPEAN PATENT SPECIFICATION**

(45) Date of publication and mention of the grant of the patent:
**25.04.2012 Bulletin 2012/17**

(21) Application number: **06843017.2**

(22) Date of filing: **21.12.2006**

(51) Int Cl.:
***B60C 9/00*** *(2006.01)* ***B60C 9/06*** *(2006.01)*
***B60C 9/08*** *(2006.01)* ***D02G 3/02*** *(2006.01)*
***D02G 3/48*** *(2006.01)*

(86) International application number:
**PCT/JP2006/325543**

(87) International publication number:
**WO 2007/074719 (05.07.2007 Gazette 2007/27)**

(54) **PNEUMATIC TIRE**

LUFTREIFEN

PNEUMATIQUE

(84) Designated Contracting States:
**DE ES FR GB IT**

(30) Priority: **26.12.2005 JP 2005372241**
**26.12.2005 JP 2005372681**

(43) Date of publication of application:
**10.09.2008 Bulletin 2008/37**

(73) Proprietor: **Bridgestone Corporation**
**Tokyo 104-0031 (JP)**

(72) Inventor: **ZUIGYO, Yugo**
**Kodaira-shi,**
**Tokyo 1870031 (JP)**

(74) Representative: **Oxley, Robin John George et al**
**Marks & Clerk LLP**
**90 Long Acre**
**London**
**WC2E 9RA (GB)**

(56) References cited:
**JP-A- 2000 264 012** **JP-A- 2001 146 638**
**JP-A- 2001 295 134** **JP-A- 2002 002 215**
**JP-A- 2002 307 908** **JP-A- 2003 013 326**
**JP-A- 2003 123 648** **JP-A- 2003 226 107**
**JP-A- 2004 090 768** **JP-A- 2004 306 631**
**JP-A- 2004 306 632** **JP-A- 2004 306 635**
**JP-A- 2006 123 649** **JP-A- 2006 321 383**
**JP-A- 2007 055 555**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 967 388 B1

## Description

### Technical Field

The present invention relates to pneumatic tires (hereinafter also simply referred to as "tires"), in particular to a heavy duty pneumatic tire for pickups, trucks, and busses, and in further particular to a heavy duty pneumatic tire that can realize weight reduction without impairing travelling durability.

### Background Art

It has been a common practice to use steel cords in carcass plies of pneumatic tires for pickups, trucks, and busses and heavy duty pneumatic tires for off-road and the like, and this has inevitably led to heavy weight. However, recent years require weight reduction of tires from the environmental protection and energy saving point of view, and high-strength organic fiber cords which are more lightweight than the steel cords have attracted much attention.

From this viewpoint, polyketone fibers which are lighter than steel cords and have high elasticity and high fatigue resistance are drawing much attention (for example, refer to Patent Document 1). From the same viewpoint, Patent Document 2 reports that weight reduction can be achieved while maintaining the same level of travelling durability as the current products by using carcass plies composed of polyketone fibers and a coating rubber having predetermined physical properties and thereby reducing the difference in rigidity between the cords and the rubber. Patent Document 1: Japanese Unexamined Patent Application Publication No. 2000-142019 (refer to claims etc.) Patent Document 2: Japanese Unexamined Patent Application Publication No. 2004-306631 (refer to claims etc.)

Reference is also made to JP-A-2003-226107.

### Disclosure of Invention

### Problems to be Solved by the Invention

Although weight reduction of tires has been achieved by using the polyketone fibers disclosed in the above-described patent documents in carcass plies, further weight reduction is desired today to improve performances. For example, in order to obtain a sufficient carcass strength by using, instead of polyketone fibers, high-strength organic fibers, such as aramid fibers, which have been used in conventional tires, it has been necessary to increase the number of embedded cords per unit width to be larger than in the case of using steel cords, or to form two or more carcass layers. However, increasing the number of embedded cords per unit width causes crack growth in end portions of carcass plies, which has led to a problem of degraded travelling durability.

Moreover, if two or more carcass layers are formed, the difference between the inner and outer diameters that is generated during tire manufacture cannot be absorbed by the carcass cords, resulting in loosening of carcass cords at the tire inner surface side. Thus, there has been a problem of insufficient strength and rigidity, or degraded durability.

Thus, an object of the present invention is to provide a pneumatic tire suitable for heavy duty use that can achieve a higher level of weight reduction than the conventional art while exhibiting sufficient strength and rigidity as the carcasses and maintaining the travelling durability comparable to the existing art.

### Means for Solving the Problems

The present inventor has conducted extensive investigations to overcome the problems and found that the above-described object can be achieved by using polyketone fibers that satisfy certain physical property values in carcasses, thereby accomplishing the present invention.

That is a pneumatic tire of the present invention includes a carcass including at least two carcass plies that toroidally extend between a pair of bead cores and a belt layer including at least one belt ply, the belt layer being disposed on a crown portion at an outer side of the carcass in a tire radial direction, wherein at least one of the carcass plies is constituted by organic fiber cords and a coating rubber coating the organic fiber cords, in which the organic fiber cords are polyketone fiber cords, the pneumatic tire of the present invention being suitable for heavy duty use, the cords of the carcass ply extending within a range of ±45° with respect to the tire radial direction between the bead cores, and the polyketone fiber cords having a dry heat shrinkage ratio of 1 to 7% at 150°C.

In such a case, original yarn of the polyketone fibers preferably has a tensile strength of 10 cN/dtex or more. Original yarn of the polyketone fibers preferably has a tensile elasticity of 200 cN/dtex or more. The polyketone fiber cords preferably have a dry heat shrinkage ratio of 2 to 4% at 150°C. The number of the carcass plies is preferably 2 to 3.

Advantages

According to the present invention, as for the heavy duty pneumatic tire, sufficient carcass strength and rigidity can be obtained, and a higher level of weight reduction than the conventional art can be achieved while maintaining the travelling durability comparable to the existing product.

Brief Description of Drawings

[Fig. 1] A cross-sectional view showing a heavy duty pneumatic tire according to an example of the present invention.

Reference Numerals

| | |
|---|---|
| 1 | heavy duty pneumatic tire |
| 2 | bead core |
| 3 | carcass ply |
| 4, 5 | reinforcing layer |
| 6 | belt layer |
| 7 | tread |

Best Modes for Carrying Out the Invention

The embodiments of the present invention will now be described in detail.

Fig. 1 is a cross-sectional view of a pneumatic tire for pickups, which is an example of a heavy duty pneumatic tire according to an embodiment of the present invention. As shown in Fig. 1, a tire 1 includes a pair of bead cores 2 (only one is shown in Fig. 1), at least two carcass plies 3 (in the example shown in the drawing, two carcass plies are provided), reinforcing layers 4 and 5, and a belt layer 6 constituted by at least one belt ply (in the example shown in the drawing, three belt plies are provided). The carcass plies 3 are each constituted by polyketone fiber (hereinafter abbreviated as "PK fiber") cords of the present invention described below and a coating rubber coating the PK fiber cords.

In the heavy duty pneumatic tire 1 shown in the drawing, the carcass plies 3 each have many PK fiber cords coated with the coating rubber and extending in a direction within a range of ±45° with respect to the tire radial direction. In the tire 1 of the preferred embodiment shown in the drawing, each carcass ply 3 has a carcass frame toroidally extending between the bead cores 2; and the carcass ply 3 includes turn-up portions 3A each turned up and folded from the inner side of the tire toward the outer side of the tire around the bead core 2 as they extend.

In order to achieve a desired effect, at least two and preferably two to three carcass plies 3 are provided. As shown in the drawing, at least an end portion 3B of each of the turn-up portions 3A is preferably coated from the tire outer side with reinforcing layers, e.g., the first reinforcing layer 4 including steel cords and the second reinforcing layer 5 including organic fiber cords. In particular, the first reinforcing layer 4 may be a single rubber-coated layer including many steel cords arranged obliquely with respect to the PK fiber cords of the carcass plies 3, preferably at an angle of 55° to 80°, or may have a structure in which a plurality of layers are stacked so that the steel cords intersect one another between the layers.

The second reinforcing layer 5 disposed at the outer side of the first reinforcing layer 4 may have a structure in which a plurality of rubber-coated layers including many organic fiber cords arranged obliquely with respect to the PK fiber cords of the carcass plies 3, preferably at an angle of 25° to 65°, are stacked so that the organic fiber cords intersect one another between the layers.

Among the layers of the second reinforcing layer 5, the layer in contact with the first reinforcing layer 4 preferably has an end portion positioned at the radial outer side of the end portion of the first reinforcing layer 4 and is preferably located at the radial inner side of the rest of the layers of the second reinforcing layer 5; moreover, the organic fiber cords constituting the layer in contact with the first reinforcing layer 4 are preferably arranged in the same direction as the steel cords of the first reinforcing layer 4.

As discussed above, by sequentially stacking the first reinforcing layer 4 and the second reinforcing layer 5 so that they extend from the position at the outer side in the tire radial direction of the end portion 3B of the turn-up portion 3A, through the lower end of the bead core 2, and along the carcass plies 3, especially the stresses concentrated at the end portion 3B of the turn-up portion 3A can be relieved and a bead portion reinforcing structure that suppresses separation that occurs from the end portion 3B can be obtained. Note that the end portion at the outer side in the tire

radial direction of the second reinforcing layer 5 may be positioned at the outer side in the tire radial direction of the end portion of the first reinforcing layer 4.

The tire 1, which is a preferred embodiment, shown in the drawing has the belt layer 6 and a tread layer 7 on the crown portion at an outer side of the carcass plies 3 in the tire radial direction. The belt layer 6 may include at least one belt ply layer. The tread layer 7 has a plurality of circumferential grooves 7A extending along an equatorial plane O of the tire, and, if necessary, transversal grooves extending in a direction intersecting the circumferential grooves 7A may be adequately provided. The belt layer 6 and the circumferential grooves 7A are not particularly limited and any known structure and the like may be employed.

It is essential for the heavy duty pneumatic tire 1 of the present invention that the organic fiber cords used in the carcass plies 3 described above are polyketone fiber cords having a dry heat shrinkage ratio at 150°C of 1 to 7%, preferably 2 to 4% and that at least one such carcass ply 3 is provided. At a dry heat shrinkage ratio of 1% or more, the difference between the inner and outer diameters that is generated during tire manufacture can be absorbed, sufficient carcass strength and rigidity can be obtained, and a higher level of weight reduction than the conventional art can be achieved while maintaining the travelling durability comparable to the existing product. Since an excessively large dry heat shrinkage ratio disadvantageously degrades dimensional stability after vulcanization and uniformity of the products, the ratio needs to be 7% or less.

The PK fiber cords used in the present invention will now be described in detail below.

The tensile strength of original yarn of the PK fiber used in the present invention is preferably 10 cN/dtex or more and more preferably 15 cN/dtex or more. As the tensile strength becomes higher, the fibers can be used in the fields where strength is required and the weight of the fibers used can be reduced.

The tensile elasticity thereof is preferably 200 cN/dtex or more and more preferably 300 cN/dtex or more. As the tensile elasticity becomes higher, the dimensional change under the same load becomes smaller and an excellent effect is achieved in dimensional stability.

The dry heat shrinkage ratio here is determined by subjecting PK fibers after a common dip treatment but before vulcanization to a dry heat treatment in an oven at 150°C for 30 minutes, applying a load of 1/30 (cN/dtex) to the resulting fibers while measuring the cord length before and after the heat treatment, and then calculating the ratio using the equation below:

$$\text{Dry Shrinkage Ratio (\%)} = (Lb - La)/Lb \times 100$$

(where Lb is a fiber cord length before the heat treatment and La is a fiber cord length after the heat treatment).

The tensile strength and the tensile elasticity of the PK fiber original yarn are values obtained by measurement in accordance to Japanese Industrial Standard (JIS)-L-1013. The tensile elasticity is a value of an initial elasticity calculated from the load at an elongation of 0.1% and a load at an elongation of 0.2%.

The PK fiber cords used in the present invention are preferably PK fiber cords described in detail below. In other words, the PK fibers are preferably twisted multifilaments having a total of 3000 to 17000 decitex per cord. Cords with a total decitex per cord of 3000 to 17000 can achieve high rigidity and weight reduction relative to the steel cords, which is advantages of organic fibers. At a total decitex less than 3000, sufficient rigidity as the carcass plies cannot be obtained, and beyond 17000 decitex, the gauge of the carcass plies becomes thick, thereby increasing the weight of the tire.

In addition, the PK fiber cords used in the present invention preferably satisfy relationships (I) and (II) below to achieve the desired effects:

$$\sigma \geq -0.01E + 1.2 \qquad (I)$$

$$\sigma \geq 0.02 \qquad (II)$$

However, if σ exceeds 1.5, the shrinkage force at the time of vulcanization becomes excessively large, and this may disturb arrangement of cords and arrangement of rubbers inside the tire and degrade durability and uniformity. Thus, the relationship below is preferably satisfied as the upper limit:

$$1.5 \geq \sigma$$

Here, the shrinkage force σ is a stress (unit: cN/dtex) generated on the cord at 177°C when a 25-cm fixed-length sample of the PK fiber cord after a common dip treatment but before vulcanization is heated at a heating rate of 5°C/min. The elasticity E is an elasticity of the same PK fiber cord observed at 25°C under a load of 49 N calculated from the tangent of the SS curve at 49 N in the cord tensile test according to JIS, and the unit is cN/dtex.

The PK fiber cord preferably has a twist coefficient α of 850 to 4000 as defined by equation (III) below:

$$\alpha = T \times D^{1/2} \qquad \text{(III)}$$

(where T is a number of twists (twist/100 mm) and D is the total fineness (dtex) of the cords). At a twist coefficient α less than 850, a heat shrinkage stress cannot be sufficiently obtained. At a twist coefficient α exceeding 4000, sufficient elasticity cannot be maintained, and reinforcing capacity becomes low.

The PK fiber cords are preferably made by twisting two or three filament bundles composed of a polyketone having a fineness of 1500 to 8500 dtex. If the fineness of the filament bundles used in the PK fiber cords is less than 500 dtex, both elasticity and heat shrinkage stress are insufficient. In contrast, beyond 3000 dtex, the cord diameter becomes large and cord cannot be embedded densely.

The material of the PK fiber cord, polyketone, is preferably substantially constituted by repeating units represented by general formula (IV)

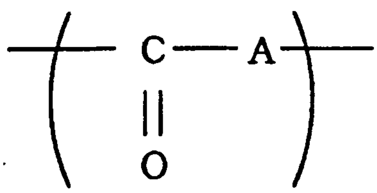

(IV)

(where A is a moiety derived from an unsaturated compound polymerized through unsaturated bonding and may be the same or different in the respective repeating units). In particular, a polyketone at least 97 mol% of repeating units of which are 1-oxotrimethylene ($-CH_2-CH_2-CO-$) is preferable, a polyketone at least 99 mol% of repeating units of which are 1-oxotrimethylene is more preferable, and a polyketone 100 mol% of repeating units of which are 1-oxotrimethylene is most preferable.

The polyketone may partially have ketones or unsaturated compound-derived moieties bonded with each other; however, the ratio of the portion where the moieties derived from the unsaturated compound and the ketone groups are alternately arranged is preferably 90 mass% or more, more preferably 97 mass% or more, and most preferably 100 mass%.

In formula (IV), the unsaturated compound forming A is most preferably ethylene but may be an unsaturated hydrocarbon other than ethylene such as propylene, butene, pentene, cyclopentene, hexene, cyclohexene, heptene, octene, nonene, decene, dodecene, styrene, acetylene, or allene; or an unsaturated bond-containing compound such as methyl acrylate, methyl methacrylate, vinyl acetate, acrylamide, hydroxyethyl methacrylate, undecenoic acid, undecenol, 6-chlorohexene, N-vinylpyrrolidone, a diethylester of sulnyl phosphoric acid, sodium styrenesulfonate, sodium allylsulfonate, vinylpyrollidone, vinyl chloride, or the like.

As for the degree of polymerization of the polyketone, the limit viscosity (η) defined by formula (V) below is preferably in the range of 1 to 20 dL/g and more preferably 3 to 8 dL/g:

$$[\eta] = \lim_{c \to 0} \frac{(T - t)}{(t \cdot c)} \qquad (V)$$

(where t is a passing time of hexafluoroisopropanol having a purity of 98% or higher at 25°C through a viscosity tube, T is a passing time of a diluted solution of polyketone dissolved in hexafluoroisopropanol at 25°C through the viscosity tube, and c is a mass (g) of a solute in 100 mL of the diluted solution). At a limit viscosity less than 1 dL/g, the molecular weight is excessively small and it becomes difficult to obtain high-strength polyketone fiber cords; moreover, troubles such as fluffing, thread breakage, and the like may occur more frequently during the steps such as spinning, drying, and drawing. In contrast, at a limit viscosity exceeding 20 dL/g, it takes time and cost to synthesize the polymer and it is difficult to homogeneously dissolve the polymer, which may adversely affect the spinnability and physical properties.

The PK fibers preferably have a crystal structure with a crystallinity of 50 to 90% and a degree of crystal orientation of 95% or more. At a crystallinity less than 50%, the fibers are not sufficiently structured and sufficient strength cannot be obtained; moreover, the shrinkage properties and dimensional stability during heating may become unstable. Thus, the crystallinity is preferably 50 to 90%, more preferably 60 to 85%.

The polyketone is preferably formed into fibers by (1) forming undrawn fibers by spinning and subjecting the undrawn fibers to multi-stage thermal drawing, in which a final drawing step of the multi-stage thermal drawing is conducted at a predetermined temperature and drawing ratio, or by (2) forming undrawn fibers by spinning, thermally drawing the undrawn fibers, and quenching the thermally drawn fibers under a high tension. By forming polyketone fibers according to the method in (1) or (2) above, desirable filaments suitable for production of the polyketone fiber cords can be obtained.

The method for spinning the polyketone undrawn fibers is not particularly limited, and a conventional method can be employed. Specific examples of the method include wet-spinning methods that use organic solvents such as hexafluoroisopropanol, m-cresol, and the like disclosed in Japanese Unexamined Patent Application Publication Nos. 2-112413 and 4-228613 and Japanese Unexamined Patent Application Publication (Translation of PCT Application) No. 4-505344, and wet-spinning methods that use aqueous solutions of salts of zinc, calcium, thiocyanate, iron, and the like disclosed in International Publication Nos. 99/18143 and 00/09611 and Japanese Unexamined Patent Application Publication Nos. 2001-164422, 2004-218189, and 2004-285221. Among these methods, the wet-spinning method that uses the aqueous solution of the salt is preferable.

For example, in the wet-spinning method that uses the organic solvent, a polyketone polymer is dissolved in hexafluoroisopropanol, m-cresol or the like at a concentration of 0.25 to 20% by mass, the resulting solution is extruded through a spinning nozzle to form fibers, and then the solvent is removed in a non-solvent bath of toluene, ethanol, isopropanol, n-hexane, isooctane, acetone, methyl ethyl ketone or the like, followed by washing to thereby obtain the polyketone undrawn fibers.

In the wet spinning method that uses the aqueous solution, a polyketone polymer is dissolved in an aqueous solution of zinc salt, calcium salt, thiocyanate, iron salt or the like at a concentration of 2 to 30% by mass, and the resulting solution is extruded from a spinning nozzle into a coagulation bath at 50 to 130°C to conduct gel spinning, followed by desalting, drying, and the like to obtain the polyketone undrawn fibers. As the aqueous solution dissolving the polyketone polymer, it is preferable to use a mixture of zinc halide and one of an alkali metal halide salt and an alkaline earth metal halide salt. As the coagulation bath, water, an aqueous solution of a metal salt, or an organic solvent such as acetone, methanol, or the like can be used.

As the method of drawing the obtained undrawn fibers, a heat drawing method is preferable in which the undrawn fibers are drawn under heating at a temperature higher than the glass transition temperature of the undrawn fibers. The drawing of the undrawn fibers in the above method (2) may be carried out in one stage but preferably in multi-stages. The heat drawing method is not particularly limited. For example, a method of allowing the fibers to travel on a heating roller or a heating plate may be employed. Here, the heat drawing temperature is preferably within the range of 110°C to the melting point of the polyketone, and the total drawing ratio is preferably 10 or more.

In the case where formation of polyketone fibers is conducted by the method (1) above, the temperature at the final drawing step of the multi-stage drawing is preferably within the range of 110°C to a temperature 3°C lower than the drawing temperature of the drawing step directly before the final drawing step. The drawing ratio in the final drawing step of the multi-stage drawing is preferably within the range of 1.01 to 1.5. In the case where formation of polyketone fibers is conducted by the method (2) above, the tension applied to the fibers after completion of the heat drawing is preferably within the range of 0.5 to 4 cN/dtex, the cooling rate during the quenching is preferably 30°C/sec or more, and the cooling end temperature of the quenching is preferably 50°C or less. The method for quenching the heat-drawn polyketone fibers is not particularly limited and a conventional method may be employed. In particular, a cooling method

that uses a roller is preferable. Since the resulting polyketone fibers have a large residual elastic strain, it is usually preferable to conduct heat-treatment for relaxation so that the fiber length is smaller than the fiber length after the heat drawing. The temperature during the heat treatment for relaxation is preferably in the range of 50°C to 100°C, and the relaxation ratio is preferably in the range of 0.980 to 0.999.

The PK fiber cords described above are composed of multifilament twisted PK fibers prepared by twisting a plurality of filaments of the polyketone described above. For example, polyketone filament bundles may be subjected to primary twisting, and two or three of the resulting twisted filament bundles may be subjected to final twisting in the opposite direction to prepare twisted cords.

In order to most effectively utilize the high heat shrinkage property of the PK fiber cords, the processing temperature during the processing and the temperature of the molded products during use are preferably near the temperature at which the PK fiber cords exhibit the maximum heat shrinkage stress (maximum heat shrinkage temperature). In particular, since the processing temperature such as a RFL temperature in the adhesive process conducted if necessary, a vulcanization temperature, or the like, is 100 to 250°C and the temperature of the heat generated from the tire materials by repeated use or high-speed rotations is 100 to 200°C, the maximum heat shrinkage temperature is preferably in the range of 100 to 250°C, and more preferably 150 to 240°C.

The carcass plies of the present invention include fiber cords constituted by the above-described polyketone fibers and a coating rubber coating the fiber cords. The coating rubber may be of any form that can coat the PK fibers. Representative examples thereof are coating films, sheets, and the like. A known rubber composition for carcass plies may be adequately employed as the coating rubber without any particular limitation.

The PK fiber cords of the present invention are coated by a known method such as dipping, applying, bonding, or the like using a rubber composition so as to form carcass plies. The carcass plies may have various shapes, arrangements, coating forms, and the like of the PK fiber cords.

EXAMPLES

(Preparation Example of PK Fibers)

A polyketone polymer having a limit viscosity of 5.3 prepared by copolymerizing carbon monoxide and ethylene prepared by conventional processes into a perfect alternating copolymer was added to an aqueous solution containing 65 percent by weight of zinc chloride and 10 percent by weight of sodium chloride and dissolved under stirring at 80°C for 2 hours to obtain a dope having a polymer concentration of 8 percent by weight.

The dope was heated to 80°C, filtered with a 20 μm sintered filter, and extruded from a 50-hole spinneret with a hole diameter of 0.10 mmφ kept at 80°C into a 18°C water bath containing 5 percent by weight of zinc chloride at a extrusion rate of 2.5 cc/min after passing through a 10 mm air gap so as to form coagulated filaments while drawing at a rate of 3.2 m/min.

Subsequently, the coagulated filaments were washed with a 2 wt% aqueous sulfuric acid solution at 25°C and then with 30°C water, and were taken up at a rate of 3.2 m/min.

The coagulated filaments were impregnated with 0.05 percent by weight of IRGANOX 1098 (produced by Ciba Specialty Chemicals Inc.) and 0.05% by weight of IRGANOX 1076 (produced by Ciba Specialty Chemicals Inc.) on a basis of the amount of the polyketone polymer. The resulting coagulated filaments were dried at 240°C and processed with a finishing agent to obtain undrawn fibers.

A finishing agent having the following composition was used as the finishing agent: lauryl oleate/bisoxyethyl bisphenol A/polyether (propylene oxide/ethylene oxide = 35/65, molecular weight: 20000)/polyethylene oxide(10 mol added) oleyl ether/polyethylene oxide(10 mol added) castor oil ether/sodium stearylsulfonate/sodium dioctylphosphate = 30/30/10/5/23/1/1 (ratio on a basis of percent by weight)

The obtained undrawn fibers were subjected to five-stage drawing. In particular, the undrawn fibers were drawn at 240°C at a first stage, 258°C at a second stage, 268°C at a third stage, 272°C at a fourth stage, and at 200°C at a fifth stage and a drawing ratio of 1.08 (the drawing tension: 1.8 cN/dtex), and were taken up by a winder. The total drawing ratio of the undrawn fibers to the fibers after the five-stage drawing was 17.1. The fiber original yarn had high physical properties, i.e., a strength of 15.6 cN/dtex, an elongation of 4.2%, and an elastic modulus of 347 cN/dtex.

(Examples 1-1 to 1-5, Comparative Examples 1-1 to 1-3, and Conventional Example 1-1)

In Examples and Comparative Examples below, PK fibers having the cord physical properties shown in Table 1 below were obtained by employing the heat treatment conditions for the PK fibers in Preparation Example above and adequately adjusting the cord twisting conditions and dipping conditions according to standard methods. The pneumatic tire shown in Fig. 1 (size: 11 R 22.5) was experimentally made by a standard process under the conditions shown in Table 1 and described below.

Each of the tire samples obtained as a result was rated according to the evaluation process below.

(Travelling durability)

A tire sample (inner pressure: 700 kPa) was subjected to deterioration resistance drum testing. The result was indexed by assuming the travelling distance at which failure occurred in the tire of Conventional Example 1-1 to be 100. The larger the figure, the better the travelling durability. The results are shown in Table 1.

[Table 1]

| | EXAMPLE 1-1 | EXAMPLE 1-2 | EXAMPLE 1-3 | EXAMPLE 1-4 | EXAMPLE 1-5 |
|---|---|---|---|---|---|
| Number of carcass plies | 2 | 2 | 2 | 3 | 2 |
| Fiber material reinforcing carcass | Polyketone fibers | Polyketone fibers | Polyketone fibers | Polyketone fibers | Polyketone fibers |
| Tensile strength of fiber original yarn (cN/dtex) | 15.6 | 15.6 | 15.6 | 15.6 | 15.6 |
| Tensile elasticity of fiber original yarn (cN/dtex) | 347 | 347 | 347 | 347 | 347 |
| Twist coefficient α | 2800 | 1800 | 4200 | 2800 | 2800 |
| Cord dry heat shrinkage ratio (%) | 3 | 1 | 7 | 3 | 3 |
| Cord heat shrinkage stress (cN/dtex) | 0.7 | 0.45 | 0.6 | 0.7 | 0.7 |
| Cord tensile elasticity (cN/dtex) | 120 | 135 | 90 | 120 | 120 |
| Ply cord angle (radial direction 0 deg.) | 0 | 0 | 0 | 0 | 10 |
| Cord diameter (mm) | 1 | 1 | 1 | 1 | 1 |
| Cord strength (N) | 1050 | 1200 | 1000 | 1050 | 1050 |
| Number of embedded cords per carcass (cords/50 mm) | 30 | 30 | 30 | 20 | 30 |
| Carcass total strength (kN/50mm) | 63 | 72 | 60 | 63 | 63 |
| Code gap of ply end portion of the same carcass ply (mm) | 0.67 | 0.67 | 0.67 | 1.50 | 0.67 |
| Weight of cords in carcass ply (kg) | 1.03 | 1.03 | 1.03 | 1.03 | 1.03 |
| Travelling durability (index) | 100 | 100 | 100 | 100 | 100 |

| | COMPARATIVE EXAMPLE 1-1 | COMPARATIVE EXAMPLE 1-2 | COMPARATIVE EXAMPLE 1-3 | CONVENTIONAL EXAMPLE 1-1 |
|---|---|---|---|---|
| Number of carcass plies | 1 | 1 | 2 | 1 |
| Fiber material reinforcing carcass | Polyketone fibers | Aramid fibers | Aramid fibers | Steel cords |
| Tensile strength of fiber original yarn (cN/dtex) | 15.6 | 19 | 19 | - |
| Tensile elasticity of fiber original yarn (cN/dtex) | 347 | 410 | 410 | - |
| Twist coefficient α | 2800 | 2800 | 2800 | - |
| Cord dry heat shrinkage ratio (%) | 3 | 0 | 0 | - |
| Cord heat shrinkage stress (cN/dtex) | 0.7 | 0 | 0 | - |
| Cord tensile elasticity (cN/dtex) | 120 | 160 | 160 | - |
| Ply cord angle (radial direction 0 deg.) | 0 | 0 | 0 | 0 |
| Cord diameter (mm) | 1 | 1 | 1 | 1 |
| Cord strength (N) | 1050 | 1100 | 1100 | 2000 |
| Number of embedded cords per carcass (cords/50 mm) | 40 | 40 | 30 | 30 |
| Carcass total strength (kN/50mm) | 42 | 44 | 66 | 60 |
| Code gap of ply end portion of the same carcass ply (mm) | 0.25 | 0.25 | 0.67 | 0.67 |
| Weight of cords in carcass ply (kg) | 0.69 | 0.69 | 1.03 | 2.92 |
| Travelling durability (index) | 50 | 55 | 70 | 100 |

The test results shown in Table 1 confirmed the following points.

(Example 1-1)

Cords composed of polyketone fibers having a dry heat shrinkage ratio of 3% at 150°C were used to form carcass plies, and two carcass plies were stacked to form a carcass. By stacking two carcass plies, an inner-layer cord

gap and a carcass total strength comparable to those of steel cords of Conventional Example were achieved, and the reduction in cord weight and high travelling durability could be achieved simultaneously.

(Example 1-2)

Cords composed of polyketone fibers having a dry heat shrinkage ratio of 1% at 150°C were used to form carcass plies, and two carcass plies were stacked to form a carcass. By stacking two carcass plies, an inner-layer cord gap and a carcass total strength comparable to those of steel cords of Conventional Example were achieved, and the reduction in cord weight and high travelling durability could be achieved simultaneously.

(Example 1-3)

Cords composed of polyketone fibers having a dry heat shrinkage ratio of 7% at 150°C were used to form carcass plies, and two carcass plies were stacked to form a carcass. By stacking two carcass plies, an inner-layer cord gap and a carcass total strength comparable to those of steel cords of Conventional Example were achieved, and the reduction in cord weight and high travelling durability could be achieved simultaneously.

(Example 1-4)

Cords composed of polyketone fibers having a dry heat shrinkage ratio of 3% at 150°C were used to form carcass plies, and three carcass plies were stacked to form a carcass. By stacking three carcass plies, an inner-layer cord gap and a carcass total strength more than those of steel cords of Conventional Example were achieved, and the reduction in cord weight and high travelling durability could be achieved simultaneously.

(Example 1-5)

Cords composed of polyketone fibers having a dry heat shrinkage ratio of 3% at 150°C were used to form carcass plies by being arranged at an angle of 10° with respect to the tire radial direction, and two carcass plies were stacked to form a carcass. By stacking two carcass plies, an inner-layer cord gap and a carcass total strength comparable to those of steel cords of Conventional Example were achieved, and the reduction in cord weight and high travelling durability could be achieved simultaneously.

(Comparable Example 1-1)

Cords composed of polyketone fibers having a dry heat shrinkage ratio of 3% at 150°C were used to form carcass plies, and a carcass was formed by using a single carcass ply. Since only one carcass ply was used, the inner-layer cord gap became narrow to obtain a carcass total strength comparable to that of steel cords of Conventional Example, and the travelling durability was degraded.

(Comparable Example 1-2)

Cords composed of aramid fibers having a dry heat shrinkage ratio of 0% at 150°C were used to form carcass plies, and a carcass was formed by using a single carcass ply. Since only one carcass ply was used, the inner-layer cord gap became narrow when a carcass total strength comparable to that of steel cords of Conventional Example was maintained, and the travelling durability was degraded.

(Comparable Example 1-3)

Cords composed of aramid fibers having a dry heat shrinkage ratio of 0% at 150°C were used to form carcass plies, and two carcass plies were stacked to form a carcass. Although the inner-layer cord gap comparable to that of the steel cords of Conventional Example was obtained by stacking two carcass plies, the cords could not absorb the inner pressure radius difference during the production and the cords were strained in a non-uniform manner, thereby degrading travelling durability.

(Conventional Example 1-1)

Conventional Example involves using steel cords to form carcass plies and formation of a carcass by using a single carcass ply.

## Claims

1. A pneumatic tire (1) comprising: a carcass including at least two carcass plies (3) that toroidally extend between pair of bead cores (2) and a belt layer (6) including at least one belt ply, the belt layer being disposed on a crown portion at an outer side of the carcass in a tire radial direction, wherein at least one of the carcass plies (3) is constituted by organic fiber cords and a coating rubber coating the organic fiber cords,
wherein the organic fiber cords are polyketone fiber cords, **characterized in that** the cords of the carcass ply (3) extend within a range of ±45° with respect to a tire radial direction between the bead cores (2), and the polyketone fiber cords have a dry heat shrinkage ratio of 1 to 7% at 150°C, wherein the pneumatic tire (1) is for use as a heavy duty tire.

2. The pneumatic tire according to claim 1, wherein original yarn of the polyketone fibers has a tensile strength of 10 cN/dtex or more.

3. The pneumatic tire according to claim 1 or 2, wherein original yarn of the polyketone fibers has a tensile elasticity of 200 cN/dtex or more.

4. The pneumatic tire according to any one of claims 1 to 3, wherein the polyketone fibers cords have a dry heat shrinkage ratio of 2 to 4% at 150°C.

5. The pneumatic tire according to any one of claims 1 to 4, wherein the number of the carcass plies (3) is 2 to 3.

## Patentansprüche

1. Luftreifen (1), der aufweist: eine Karkasse, die mindestens zwei Karkassenlagen (3), die sich ringförmig zwischen einem Paar Wulstkernen (2) erstrecken, und eine Gürtelschicht (6) umfasst, die mindestens eine Gürtellage einschließt, wobei die Gürtelschicht auf einem Zenitabschnitt auf einer Außenseite der Karkasse in einer radialen Reifenrichtung angeordnet ist, wobei mindestens eine der Karkassenlagen (3) durch organische Faserkorde und einem Beschichtungsgummi gebildet wird, der die organischen Faserkorde bedeckt,
wobei die organischen Faserkorde Polyketonfaserkorde sind, **dadurch gekennzeichnet, dass** sich die Korde der Karkassenlage (3) innerhalb eines Bereiches von ± 45° mit Bezugnahme auf eine radiale Reifenrichtung zwischen den Wulstkernen (2) erstrecken und die Polyketonfaserkorde ein Trockenwärmeschrumpfverhältnis von 1 bis 7 % bei 150 °C aufweisen, wobei der Luftreifen (1) für eine Verwendung als ein Hochleistungsreifen vorgesehen ist.

2. Luftreifen nach Anspruch 1, bei dem das Ausgangsgarn der Polyketonfasern eine Zugfestigkeit von 10 cN/dtex oder mehr aufweist.

3. Luftreifen nach Anspruch 1 oder 2, bei dem das Ausgangsgarn der Polyketonfasem eine Zugelastizität von 200 cN/dtex oder mehr aufweist.

4. Luftreifen nach einem der Ansprüche 1 bis 3, bei dem die Polyketonfaserkorde ein Trockenwärmeschrumpfverhältnis von 2 bis 4 % bei 150 °C aufweisen.

5. Luftreifen nach einem der Ansprüche 1 bis 4, bei dem die Anzahl der Karkassenlagen (3) 2 bis 3 beträgt.

## Revendications

1. Bandage pneumatique (1), comprenant : une carcasse englobant au moins deux nappes de carcasse (3), s'étendant toroïdalement entre une paire de tringles (2), et une couche de ceinture (6), englobant au moins une nappe de ceinture, la couche de ceinture étant agencée sur une partie de sommet au niveau d'un côté externe de la carcasse dans une direction radiale du bandage pneumatique, au moins une des nappes de carcasse (3) étant constituée par des câblés de fibres organiques, une gomme de revêtement recouvrant les câblés de fibres organiques ;
les câblés de fibres organiques étant des câblés de fibres de polycétone, **caractérisé en ce que** les câblés de la nappe de carcasse (3) s'étendent à un angle compris dans un intervalle de ± 45° par rapport à une direction radiale du bandage pneumatique, entre les tringles (2), les câblés de fibres de polycétone présentant un rapport de thermorétrécissement à sec compris entre 1 et 7% à 150°, le bandage pneumatique (1) étant destiné à une utilisation

comme bandage pneumatique pour poids lourds.

2. Bandage pneumatique selon la revendication 1, dans lequel le fil d'origine des fibres de polycétone présente une résistance à la traction de 10 cN/dtex ou plus.

3. Bandage pneumatique selon les revendications 1 ou 2, dans lequel le fil d'origine des fibres de polycétone présente une élasticité à la traction de 200 cN/dtex ou plus.

4. Bandage pneumatique selon l'une quelconque des revendications 1 à 3, dans lequel les câblés de fibres de polycétone présentent un rapport de thermorétrécissement à sec compris entre 2 et 4% à 150°C.

5. Bandage pneumatique selon l'une quelconque des revendications 1 à 4, dans lequel le nombre des nappes de carcasse (3) est compris entre 2 et 3.

Fig.1

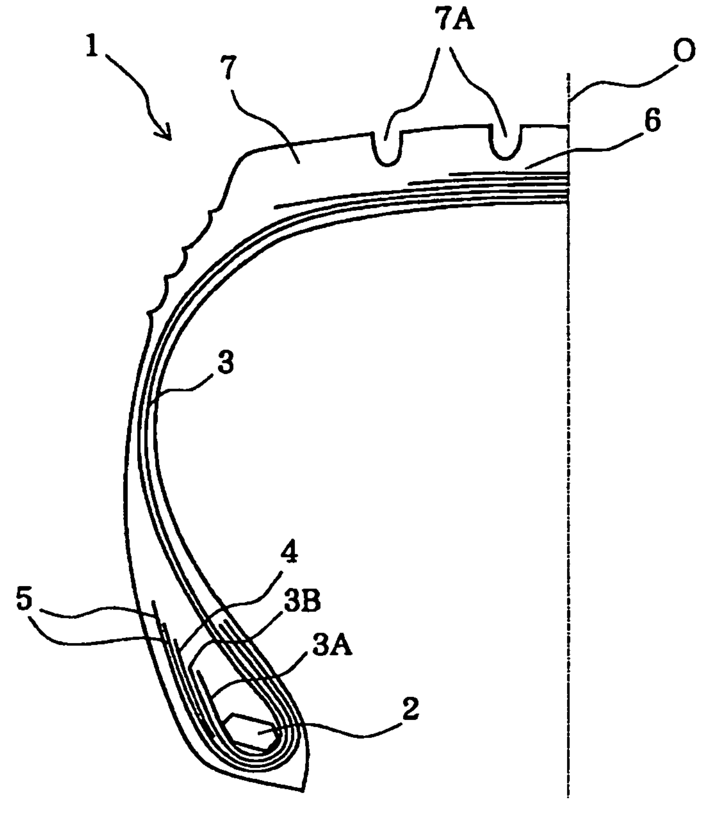

Fig.2

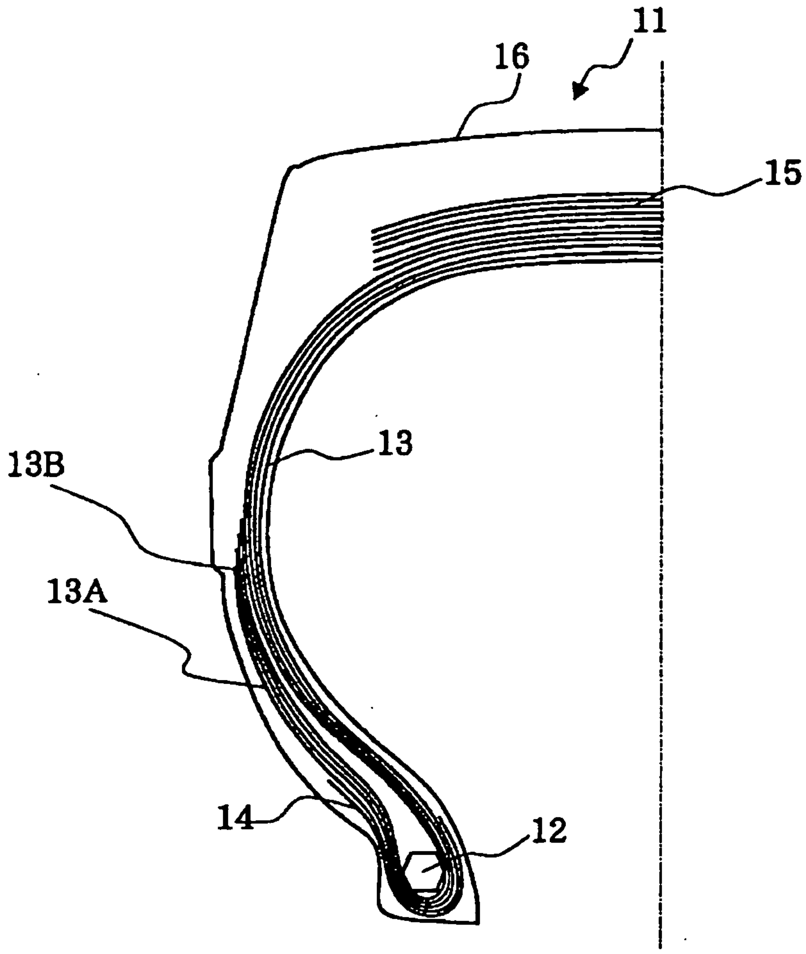

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000142019 A
- JP 2004306631 A
- JP 2003226107 A
- JP 2112413 A
- JP 4228613 A
- JP 4505344 PCT
- JP 11018143 A
- JP 0009611 A
- JP 2001164422 A
- JP 2004218189 A
- JP 2004285221 A